# EUROPEAN PATENT SPECIFICATION

(11) **EP 0 488 963 B1**
(45) Date of publication and mention of the grant of the patent: **02.03.1994**
(21) Application number: 91830486.6
(22) Date of filing: 11.11.1991
(51) Int. Cl.: F16D 43/206

(54) **A freewheel drive coupling**
Freilaufantriebskupplung
Accouplement roue-libre de transmission

(30) Priority: 28.11.1990 IT 375490
(43) Date of publication of application: 03.06.1992
(73) Proprietor: O.M.C. S.n.c. di DANTE CAVALLI & C., 40055 Villanova di Castenaso (Bologna) (IT)
(72) Inventor: Cavalli, Dante, I-40055 Villanova di Castenaso (Bologna) (IT)
(74) Representative: Lanzoni, Luciano

(56) References cited:
- DE-A- 3 700 730
- US-A- 3 722 644
- US-A- 4 858 740

## Description

The present invention relates to a drive coupling with the capacity to limit transmissible torque and operate as a freewheel device.

The use of such couplings is envisaged especially in applications where it is required that, before stopping as the result of a maximum permissible torque limit being exceeded, a driving shaft should rotate idle in relation to a driven shaft without any possibility of re-engaging automatically.

Conventional torque limiter couplings consist in a pair of coaxial hubs rigidly associated with the driving and driven shafts, of which the respective opposed or mating faces afford rolling elements and corresponding notches. Mutual engagement of the two hubs is ensured through the agency of spring means by which the rolling elements are kept seated in the respective notches.

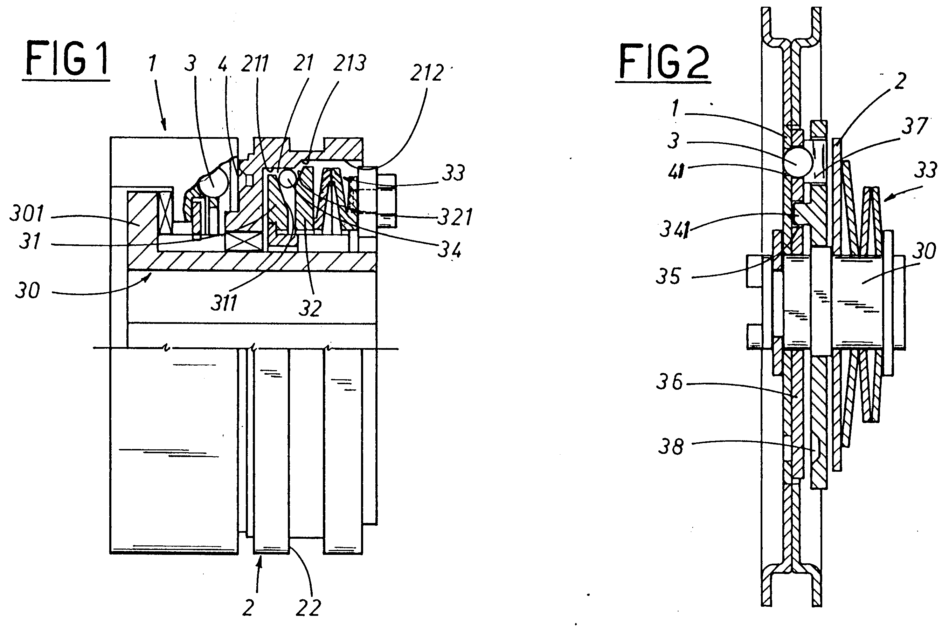

In one type of freewheel coupling (illustrated in fig 1), the hubs 1 and 2 are mounted over a further hub 30 having one flanged end 301. The outer hub 1 nearest to the flanged end 301 is rotatable and axially floatable on the inner hub 30, whilst the remaining hub 2 is mounted floatably though not rotatably on the hub 30; the latter hub 2 is keyed to the inner hub 30 and affords a coaxial recess 21 comprising two cylindrical stretches 211 and 212 of dissimilar diameter connected by a frustoconical stretch 213, the cylindrical stretch 211 of smaller diameter being nearer to the back of the recess.

The recess 21 combines with the inner hub 30 to create an annular seating for the accomodation of a pair of coaxial rings 31 and 32 with mutually opposed frustoconical surfaces 311 and 321 of which the bevels are convergent when viewed in profile.

The ring 31 nearer to the back of the recess 21 is smaller in diameter and keyed to the inner hub 30, whereas the remaining ring 32 is mounted floatably and rotatably thereon. The free ring 32 is urged permanently toward the smaller ring 31 by spring means 33 anchored to the end of the inner hub 30 without the flange 301. The space between the two rings 31 and 32 is occupied by a set of balls 34 subject to an outwardly directed radial force that is in part centrifugal and in part generated by the profile of the frustoconical surfaces 311 and 321 of the two rings 31 and 32, urged together by the spring means 33. The overall diameter of the ring denoted 32 is slightly less than that of the larger diameter cylindrical stretch 212 of the recess 21. In normal operating conditions, the balls 34 remain seated between the frustoconical surface 213 of the recess 21 and the frustoconical surface 321 of the ring 32, such that the force generated through the ring 32 by the spring means 33 is transmitted to the hub 2.

The angles of the frustonical surfaces 213 and 321 afforded respectively by the recess 21 and by the ring 32 are such, that when the reaction of the driven shaft exceeds a given maximum permissible torque and the rolling elements 3 are unseated from the notches 4, thereby distancing the hubs 1 and 2 one from another, the balls 34 are squeezed by the ring 32 and the frustoconical surface 213 of the recess 21 and forced to lodge between the rings 31 and 32 and in contact with the smaller diameter cylindrical stretch 211 of the recess 21. In this configuration, the force generated by the spring means 33 is directed through the balls 34 onto the smaller ring 31 and the cylindrical surface 211 of the recess 21.

The direction of the force transmitted from the spring means 33 through the balls 34 to the hub 2 is dependent upon the angle of the frustoconical surfaces 311 and 321 of the rings 31 and 32: thus, with identical angles, the resulting force will be exclusively radial; even if the force includes an axial component, this is not sufficient to displace the hub 2 since axial movement of the balls 34 is prevented by the smaller ring 31, and any movement over the surface 311 of this ring is prevented by the smaller diameter cylindrical stretch 211 of the hub 2.

The two outer hubs 1 and 2 are thus free to rotate idle with no possibility of mutual re-engagement under the force of the spring means.

Re-engagement of the hubs 1 and 2 can only occur in effect by operating external means to shift the one hub 2 axially toward the other; the hub 2 affords a circumferential groove for this same purpose.

In short, disengagement of the hubs is automatic and total, whereas re-engagement has to be effected by hand and is somewhat laborious, given that the operator must defeat the frictional force generated on the hub 2 by the spring means 33; considering the typical torque values transmitted through such drive couplings, moreover, it will not be difficult to imagine the order of the frictional forces in question

In addition to the physical difficulty experienced, manual re-engagement can also be hazardous when the coupling happens to be positioned in a location denying ease of access, in which case the physical effort is increased still further.

Another type of freewheel drive coupling disclosed in German patent application n° 1 174 116 (shown in fig 2), comprises two coaxial discs, denoted 1 and 2 and comparable to the driving and driven hubs of the embodiment described above, and between the two discs, an intermediate third disc 36 functioning as carrier for a plurality of balls 3 protruding from the faces of the disc 36 itself. The driven disc 1 affords holes 41 partly accommodating the balls 3, whilst the driving disc 2 affords a plurality of transversely disposed inset cylindrical teeth or rollers 37. The driven disc 1 is freely rotatable about a shaft denoted 30, whilst the driving disc 2 is keyed to and axially floatable on the shaft 30. Also keyed to the shaft 30 are spring means 33 by which the driving disc 2 and the rollers 37 are urged against the driven disc 1.

In this configuration, with the spring means 33 totally or almost totally expanded, rotation of the driving disc 2 causes the rollers 37 to engage the balls 3 and set the driven disc 1 in rotation at an angular velocity identical to that of the driving disc 2. The driving disc 2 also exhibits a fixed tooth 34 accommodated internally of a corresponding slot 35 shaped as a sector to a circle, afforded by the intermediate disc 36, and a plurality of sector shaped seatings 38 between one roller 37 and the next. In the event that the driven disc 1 should be prevented from turning as the result of an overload whilst the driving disc 2 continues to rotate, the rollers 37 are forced over the balls 3, distancing the discs from one another and causing the spring means 33 to compress and expand by turns.

Thereafter the balls 3 locate in the seatings 38 of the driving disc 2, and the tooth 341, registering against the relative end of the slot 35, causes the intermediate disc or carrier 36 to rotate and thus unseat the balls 3 from the holes 4. The depth of the seatings 38 is such that the balls 3 are able to rotate freely between the driving and driven discs 2 and 1 with the spring means 33 expanded completely or almost completely. In this condition, the driving and driven discs 2 and 1 rotate freely one in relation to the other. Re-engagement can occur only if the driving disc 2 is rotated in the direction opposite to that of normal operation, such that the balls 3 reoccupy their holes 4 and the intermediate disc or carrier 36 is locked in position. The tooth 34 regains the slot 35, and the rollers 37 engage and ride over the balls 3, such that the driving disc 2 is distanced from and then returned toward the driven disc 1 by compression and successive expansion of the spring means 33.

Whilst this type of solution may be more practical and less physically demanding than the first, there is the considerable disadvantage that the spring means 33 are not normally compressed in operation, and a swift and precise response cannot therefore be obtained.

Another further type of freewheel torque limiting coupling disclosed in US-A-3 722 644 patent (not shown), comprises a driving member urged into contact with a driven member by springs. The coupling utilizes a plurality of balls positioned stably in relative seatings, and a corresponding plurality of pockets to receive the balls, one cage for the balls positioned between the two members prevents from re-engaging the coupling when is released by excessive torque. The cage can be detented in one of two position in relation with one member and comprises three keys afforded by the surface of the cage directed towards the other member and accomodated in corresponding openings, offered by the latter member. The length of the key is less than the distance between the two members, when the balls are unseated from the pockets. The coupling is reset when relative direction of rotation is reversed to that of normal operation. With this type of coupling is not possible the re-engagent hy hand, because the cage is completely housed by the members of the coupling.

Acccordingly, the object of the invention is to set forth a freewheel coupling in which re-engagement of the driving and driven members depends neither on access to the coupling nor on full expansion of the spring means and that also permits a manual re-engagement without any rotation of the transmission line.

The stated object is realized in a freewheel drive coupling as characterized in the appended claims, comprising two coaxial hubs associated with the members or shafts to be connected mechanically and urged into mutual contact by spring means, of which the transverse mating faces afford, respectively, a plurality of identical rolling elements positioned stably in relative seatings and freely rotatable at least about respective axes disposed radially in relation to the hubs, and a corresponding plurality of frontal notches to receive the rolling elements, distributed about respective circumferences of identical diameter concentric with the common axis of the hubs; and at least one ring associated with one of the hubs, by which the rolling elements are prevented from re-engaging the notches if unseated as the result of an excessive reaction through the hub associated with the driven shaft. In a coupling according to the invention, the ring occupies an annular seating formed coaxially in the transverse mating face of the respective hub, the diameter of which is dissimilar to that of the circumference around which the rolling elements and the notches are distributed, and the presence instrumental in establishing an annular race that protrudes beyond the mating face of the hub. The ring also affords a plurality of radial projections capable of movement tangentially though not axially in relation to the relative hub, internally of radial slots formed in the annular race and serving to limit the angle of rotation allowed to the ring in relation to the hub. The coupling further comprises disengagable locking means between the ring and the respective hub by which the ring can be detented in one of at least two angular positions in relation to the hub, and a plurality of frontal teeth, afforded by the face of the ring directed toward the remaining hub, and accommodated in corresponding sockets afforded by the latter hub whenever the rolling elements are seated in the notches. The axial depth of the teeth is no greater than the distancing movement between the two hubs as measured along their common axis of rotation, occasioned when the rolling elements are unseated from the notches, and the minimum angle of relative rotation allowed by the locking means between the ring and the associated hub no greater than the angle through which the hubs rotate in relation to one another when the rolling elements are unseated from the notches; thus, the teeth and the rolling elements begin to enter and engage the sockets and the notches only when the driving hub is rotated in the direction opposite to that of normal operation. The ring is disposed internally of the annular race and rigidly associated by way of the relative projections with a second ring occupying a further seating disposed coaxially with an externally of the annular race.

The invention will now be described in detail, by way of example, with the aid of the accompanying drawings, in which:
- figs 1 and 2 are longitudinal sections through torque limiting and freewheel drive couplings of conventional embodiment;
- fig 3 is the exploded view of a drive coupling according to the invention;
- fig 4 shows a detail of the coupling in fig 3, seen in perspective and from a direction different to that of fig 3;
- fig 5 shows the coupling of fig 3, assembled, in a frontal view with certain parts omitted better to reveal others;
- fig 6 provides a schematic illustration of the operation of a coupling as in figs 3 to 5.

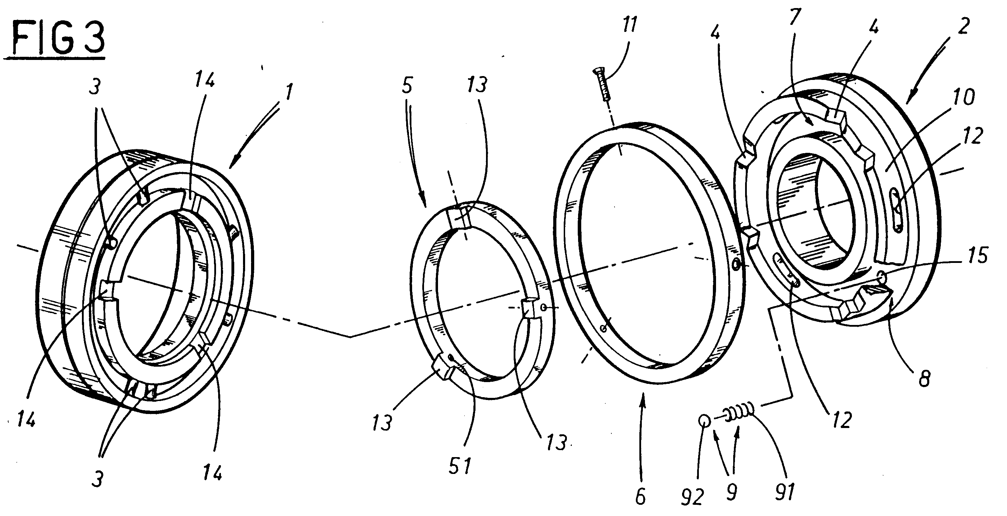

With reference to figs 3, 4 and 5 of the drawings, a torque limiting and freewheel drive coupling according to the invention comprises two hubs 1 and 2 keyed in conventional manner to two shafts (not illustrated). The hubs 1 and 2 present a plurality of rolling elements 3 and a corresponding plurality of notches 4, respectively. The rolling elements 3, illustrated by way of example in figs 3 and 5 as cylindrical rollers, are accommodated in respective seatings (not illustrated) with freedom to rotate about individual axes disposed radially in relation to the relative hub 1. The coupling also comprises spring means (conventional in embodiment, therefore not shown in the interests of simplicity), by which the two hubs are urged into mutual contact. By way of example, figs 3 to 5 illustrate a drive coupling of which the rolling elements 3 and the respective notches 4 are spaced apart circumferentially at distances whereby mutual engagement can occur only when the two hubs 1 and 2 are rotated through a precise angle one in relation to the other.

The drive coupling according to the invention also comprises a ring 5 associated permanently with one of the hubs, that denoted 2 in fig 3, and occupying a relative seating 7 afforded by the face affording the notches 4.

More exactly, the seating 7 is formed in the hub 2 in such a way as to establish an annular race 10 of which the frontal surface affords the notches. The ring 5 affords a plurality of radial projections 11 insertable through respective radial slots 12 in the annular race 10. Such projections 11 appear in fig 3 as screws inserted into corresponding radial holes 51 afforded by the ring 5. The slots 12 are of precise angular length in relation to the axis of the hub 2, thus limiting the angular movement allowed to the projections 11.

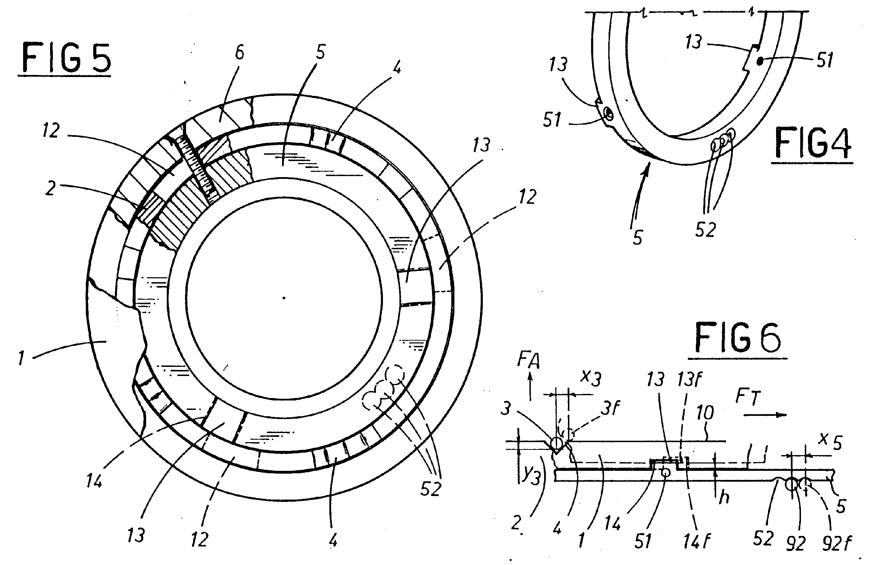

The ring 5 also exhibits a plurality of frontal teeth 13 positioned so as to engage in respective sockets 14 afforded by the mating face of the hub 1 that carries the rolling elements 3. The depth, or height of the teeth 13, denoted 'h' in fig 6 and measured parallel to the common axis of the hubs 1 and 2, is equal to the distance that separates the position in which the two hubs 1 and 2 are fully engaged from the position in which one is able to rotate freely in relation to the other, as will be described in due course.

9 denotes disengagable locking means installed between the ring 5 and the associated hub 2, by which the ring 5 can be detented in one of at least two angular positions in relation to the hub 2.

Such means 9 are shown in fig 3 as a spring 91 and a ball 92 accommodated internally of a respective socket 15 formed in the hub 2 at the back of the seating 7. The face of the ring 5 offered slidably to the seating 7 affords three detent sockets 52 capable of accommodating the ball 92 in part. The central socket 52 of the three occupies a position such that when engaged by the ball 92, the teeth 13 and the rolling elements 3 are able to align with the sockets 14 and with the notches 4, respectively (bold line, figs 5 and 6). By contrast, when either of the remaining sockets 52 detains the ball 92, alignment is possible only between the teeth 13 and the sockets 14 or between the rolling elements 3 and the notches 4 (phantom line in fig 6).

Operation of the coupling will now be described, departing from a normal condition with the rolling elements 3 engaged in the respective notches 4, the teeth 13 in the sockets 14, and the ball 92 of the locking means in the central socket 52 (bold line, fig 5).

In the event that the reaction of the driven shaft should exceed the prescribed maximum transmissible torque value, the driving hub 2 begins to rotate in relation to the driven hub 1. In this situation, the rolling elements 3 begin to ride on the angled surfaces of the notches 4 (the inclination of which is conventional and indeed necessary, otherwise the rolling elements 3 would not be able to unseat), moving obliquely in relation to the planes occupied by the hubs 1 and 2. Thus, the rolling elements 3 are displaced both in a direction parallel with the axis of the hubs 1 and 2 (arrow FA in fig 6) and tangentially thereto (arrow FT in fig 6). Clearly, the same movement is described by the driving hub 2 carrying the ring 5 with the frontal teeth 13; the teeth are able to describe only an axial movement within their sockets 14, however, and consequently are distanced from the driven hub 1, forcing the ring 5 at the same time to rotate in relation to the driving hub 2, or in fact to remain motionless together with the driven hub 1, as this in reality is the member which draws to a halt or rotates at the lower angular velocity. The moment the rolling elements 3 completely vacate the notches 4 and move onto the race 10, the driving hub 2 having shifted axially and tangentially through distances denoted y3 and x3 respectively, in fig 6, the teeth 13 will be entirely clear of the respective sockets 14 with the ball 92 unseated from the central socket 52 and reseated in one of the two lateral sockets 52. The height 'h' of the teeth 13, it will be recalled, is no greater than the axial shift y3 allowed to the driving hub 2. With the driving hub 2 continuing to rotate in the direction FT of normal operation, each revolution brings the rolling elements 3 into alignment with the relative notches 4; at the same time, however, the teeth 13 remain out of alignment with the relative sockets 14. Following a further movement of the driving hub 2 through an angular distance equal to x3, the teeth 13 and sockets 14 will realign, though with the rolling elements 3 once again riding up onto the annular race 10, the teeth 13 cannot engage. Conversely, when the hub 2 is rotated in the reverse direction, i.e. opposite to the direction of normal operation FT (in the selfsame configuration with the teeth 13 and the sockets 14 aligned) the rolling elements 3 leave the race 10 and realign with the notches 4, and a minimal axial movement is therefore sufficient for them to reseat in the latter. Albeit minimal, this same shift is also sufficient to return the teeth 13 to their sockets 14. Any further shift in this direction ensures that the rolling elements 3 move further along the angled surfaces of the notches 4 until fully reseated, and that the teeth 13 at the same time push deeper into the sockets 14, thus drawing the ring 5 fully into synchronous rotation with the hub 2. The moment the rolling elements 3 are inserted completely into their notches 4, the two hubs 1 and 2 resume full engagement one with another.

Clearly, it is a characterizing feature of the coupling according to the invention that the axial dimension 'h' of the teeth 13 must be no greater than the axial shift denoted y3, and in like manner the distance x5 between adjacent sockets 52 of the locking means, or rather the angle through which the ring 5 rotates between successive positions of the ball 92, must be no greater than the tangential shift denoted x3, that is, the angle through which the hubs 1 and 2 rotate in relation to one another when the rolling elements 3 are unseated. It is of fundamental importance that these dimensions be maintained in order to ensure that, whenever the maximum permissible torque is exceeded, the ring 5 is locked in the configuration whereby the rolling elements 3 are on the point of unseating completely from the notches 4 and passing onto the annular race 10, that is to say, the configuration denoted by phantom lines in fig 6. Similarly, if faultless operation of the coupling is to be ensured, the slots 12 must be proportioned in such a way as to allow no axial movement whatever to the screws 11, hence to the ring 5.

Figs 3 and 5 illustrate a second ring, denoted 6, located in a respective seating 8 afforded by the driving hub 2 and combining with the seating 7 of the first ring 5 to encompass the annular race 10. This second ring 6 is greater in diameter than the first ring 5, and affords holes through which the screws 11 are freely inserted. The inclusion of the ring 6 is particularly advantageous when effecting re-engagement of the coupling by hand, given that the outer ring 6, hence the connected inner ring 5, need only be rotated in the direction opposite to that of normal operation in order to realign the teeth 13 with the respective sockets 14.

Alternative embodiments of the coupling might comprise a plurality of balls 92 spaced apart at identical angular distance around the axis of rotation of the hubs 1 and 2, and the sockets 52 might be just two per ball in number (three are required for a coupling capable of operating in either direction of rotation), or two or three in all, one for each position and for each ball 92.

## Claims

1. A freewheel drive coupling, comprising:
- two coaxial hubs (1, 2), associated with two members or shafts to be connected mechanically and urged into mutual contact by spring means, of which the transverse mating faces afford a plurality of identical rolling elements (3) positioned stably in relative seatings and freely rotatable at least about respective axes disposed radially in relation to the hubs (1, 2), and a corresponding plurality of notches (4) to receive the rolling elements (3), respectively, distributed about circumferences of identical diameter concentric with the common axis of the hubs;
- at least one ring (5) associated with one of the two hubs (1, 2), by which the rolling elements (3) are prevented from re-engaging the notches (4) if unseated as the result of an excessive reaction through the hub (1) associated with the driven shaft, said ring (5) occupies an annular seating (7) formed coaxially in the transverse mating face of the respective hub (2 or 1), the diameter of which is dissimilar to that of the circumference around which the rolling elements (3) and the notches (4) are distributed, and the presence of which is instrumental in establishing an annular race (10) that protrudes beyond the mating face of the hub (2 or 1), it further affords a plurality of radial projections (11) capable of movement tangentially though not axially in relation to the respective hub, internally of radial slots (12) formed in the annular race (10) and serving to limit the angle of rotation allowed to the ring (5) in relation to the hub (2 or 1);
- disengagable locking means (9) located between the ring (5) and the respective hub (2 or 1) by which the ring can be detented in one of at least two angular positions in relation to the hub, and a plurality of frontal teeth (13) afforded by the face of the ring (5) directed toward the remaining hub (1 or 2) and accommodated in corresponding sockets (14), offered by the latter hub (1 or 2), whenever the rolling elements (3) are seated in the notches (4); the axial dimension (h) of said teeth (13) is no greater than the distancing movement (y3) between the two hubs (1 or 2) as measured along their common axis of rotation, occasioned when the rolling elements (3) are unseated from the notches (4), and the minimum angle of relative rotation allowed by the locking means (9) between the ring (5) and the associated hub (2) is no greater than the angle through which the hubs (1, 2) rotate in relation to one another when the rolling elements (3) are unseated from the notches (4), in such a way that the teeth (13) and the rolling elements (3) begin to enter and engage the sockets (14) and the notches (4) only when the driving hub (2) is rotated in the direction opposite to that of normal operation,
characterised
- in that the ring (5) is disposed internally of the annular race (10) and rigidly associated by way of the relative projections (11) with a second ring (6) occupying a further seating (8) disposed coaxial with and externally of the annular race (10).

2. A freewheel drive coupling as in claim 1, characterised in that the locking means (9) serve to establish three relative angular positions between the ring (5) and the hub (2 or 1), including a central position of normal operation, in which the teeth (13) and the rolling elements (3) are in alignment with the sockets (14) and notches (4), and two lateral positions in which either the rolling elements (3) only are aligned with the notches (4) or the teeth (13) only are aligned with the sockets (14).

3. A freewheel drive coupling as in claim 1, characterised in that the locking means (9) are provided in at least two locations spaced apart through identical angular distances about the common axis of the hubs (1, 2).

## Patentansprüche

1. Eine Freilaufantriebskupplung, enthaltend:
- zwei an zwei Elemente oder Wellen angeschlossene koaxiale Naben (1, 2), die mechanisch miteinander verbunden und durch Federn in gegenseitigen Kontakt miteinander gedrückt werden, deren querverlaufende Paarungsflächen eine Anzahl von gleichen Abrollelementen (3) aufweisen, die stabil in entsprechenden und radial im Verhältnis zu den Naben (1, 2) angeordneten Sitzen positioniert und wenigstens um entsprechende Achsen frei drehbar sind, sowie eine entsprechende Anzahl von Aussparungen (4) zur Aufnahme der jeweiligen Abrollelemente (3), verteilt um einen entsprechenden Kreisumfang von gleichem Durchmesser und konzentrisch mit den gemeinsamen Achsen der Naben;
- wenigstens einen Ring (5), der einer der beiden Naben (1, 2) zugeordnet ist, und durch den die Abrollelemente (3) daran gehindert werden, sich wieder in die Aussparungen (4) einzufügen, wenn sie als Ergebnis einer übermässsigen Reaktion auf die der Antriebswelle zugeordneten Nabe (1) aus diesen herausgeglitten sind, wobei der genannte Ring (5) einen ringförmigen Sitz (7) belegt, der koaxial in die querverlaufende Paarungsfläche der entsprechenden Nabe (2 oder 1) eingearbeitet ist, und zwar mit einem anderen Durchmesser als der des Kreisumfanges, um den die Abrollelemente (3) und die Aussparungen (4) verteilt sind, und dessen Vorhandensein wesentlich zur Herstellung einer ringförmigen Laufbahn (10) beiträgt, die über die Paarungsfläche der Nabe (2 oder 1) hinausragt, und wobei der Ring weiter eine Anzahl von radial angeordneten Vorsprüngen (11) aufweist, in der Lage, eine tangentiale, jedoch nicht axiale Bewegung im Verhältnis zu der entsprechenden Nabe auszuführen, und zwar im Inneren von radial angeordneten Schlitzen (12), die in die ringförmige Laufbahn (10) eingearbeitet sind und dazu dienen, den Drehwinkel, der dem Ring (5) im Verhältnis zu der Nabe (2 oder 1) erlaubt ist, zu begrenzen;
- lösbare Blockiermittel (9) , die zwischen dem Ring (5) und der entsprechenden Nabe (2 oder 1) angeordnet sind, und durch die der Ring in einer der wenigstens zwei Winkelpositionen im Verhältnis zu der Nabe gehalten werden kann, sowie eine Anzahl von frontalen Zähnen (13), die von der der verbleibenden Nabe (1 oder 2) zugewandten Fläche des Ringes (5) aufgewiesen werden und in entsprechenden Vertiefungen (14) versenkt werden, die sich in letzterer Nabe (1 oder 2) befinden, wenn sich die Abrollelemente (3) in die Aussparungen (4) eingefügt haben, wobei die axiale Abmessung (h) der genannten Zähne (13) nicht grösser ist als die Abstandsbewegung (y3) zwischen den beiden Naben (1 oder 2), wie sie entlang deren gemeinsamer Drehachse gemessen wurde, wenn sich die Abrollelemente (3) ausserhalb ihrer Aussparungen (4) befinden, und wobei der geringstmögliche Winkel der entsprechenden Umdrehung, der durch die Blockiermittel (9) zwischen dem Ring (5) und der zugeordneten Nabe (2) erlaubt wird, nicht grösser ist als der Winkel, in dem sich die Naben (1, 2) im Verhältnis zueinander drehen, wenn die Abrollelemente (3) aus ihren Aussparungen (4) herausgetreten sind, und zwar auf solche Weise, dass die Zähne (13) und die Abrollelemente (3) nur in die entsprechenden Vertiefungen (14) greifen in sich in die Aussparungen (4) einfügen, wenn die Antriebsnabe (2) in die entgegengesetzte Richtung gedreht wird als die des normalen Laufes, **dadurch gekennzeichnet**, dass der Ring (5) im Inneren der ringförmigen Laufbahn (10) angeordnet und durch die entsprechenden Vorsprünge (11) starr mit einem zweiten Ring (6) verbunden ist, der einen weiteren Sitz (8) belegt, welcher koaxial zu und ausserhalb der ringförmigen Laufbahn (10) angeordnet ist.

2. Eine Freilaufantriebskupplung nach Patentanspruch 1, **dadurch gekennzeichnet**, dass die Blockiermittel (9) dazu dienen drei entsprechende Winkelpositionen zwischen dem Ring (5) und der Nabe (2 oder 1) herzustellen, einschliesslich der mittleren Position des normalen Laufs, in welcher die Zähne (13) und die Abrollelemente (3) zu den Vertiefungen (14) und den Aussparungen (4) ausgerichtet sind, sowie drei seitliche Positionen, in denen jeweils die Abrollelemente (3) nur zu den Aussparungen (4) oder die Zähne (13) nur zu den Vertiefungen (14) ausgerichtet sind.

3. Eine Freilaufantriebskupplung nach Patentanspruch 1, **dadurch gekennzeichnet,** dass die Blockiermittel (9) in wenigstens zwei um einen gleichen Winkelabstand um die gemeinsame Achse der Naben (1, 2) angeordneten Positionen vorgesehen sind.

## Revendications

1. Accouplement roue-libre de transmission, comprenant:
- deux moyeux coaxiaux (1, 2) associés à deux éléments ou arbres qui doivent être reliés mécaniquement et poussés en contact l'un de l'autres par des moyens élastiques, les faces transversales opposées de ces moyeux prévoyant une pluralité d'éléments de roulement égaux (3) reçus de manière stable dans des logements respectifs et susceptibles de rotation libre au moins autour de respectifs axes disposés radialement par rapport aux moyeux (1, 2), et respectivement une pluralité correspondante d'encoches (4) pour la réception des éléments de roulement (3), lesdits éléments de roulement et encoches étant distribués sur des circonférences ayant le même diamètre et concentriques avec l'axe commun des moyeux;
- au moins une bague (5) associée à l'un des deux moyeux (1, 2), par laquelle les éléments de roulement (3) sont empêchés de rentrer dans les encoches (4) quand à la suite d'une excessive réaction sur le moyeu (1) associé à l'arbre entraîné on a causé leur sortie, ladite bague (5) occupant un logement annulaire (7) formé coaxialement dans la face transversale de contact du moyeu respectif (2 ou 1), dont le diamètre est dissemblable de celui de la circonférence sur laquelle les éléments de roulement (3) et les encoches (4) sont distribués, et dont la présence contribue à établir un chemin annulaire (10) faisant saillie au-delà de la face de contact du moyeu (2 ou 1), ladite bague prévoyant en outre une pluralité de saillies radiales (11) susceptibles de mouvement tangentiel mais non axial par rapport au moyeu respectif à l'intérieur de fentes radiales (12) formées dans le chemin annulaire (10) et servant à limiter l'angle de rotation de la bague (5) par rapport au moyeu (2 ou 1);
- des moyens d'encliquetage (9) susceptibles de dégagement, placés entre la bague (5) et le moyeu respectif (2 ou 1), par lesquels la bague peut être bloquée dans une d'au moins deux positions angulaires par rapport au moyeu, et une pluralité de dents de face (13) présentées par la face de la bague (5) en regard du moyeu restant (1 ou 2), ces dents étant destinées à être reçues dans des sièges correspondants (14) présentés par ce dernier moyeu (1 ou 2) chaque fois que les éléments de roulement (3) sont logés dans les encoches (4); la dimension axiale (h) desdites dents (13) n'est pas supérieure au déplacement relatif (y3) entre les deux moyeux (1, 2) comme mesuré le long de leur axe de rotation commun, provoqué quand les éléments de roulement (3) sortent des encoches (4), et l'angle minimum de rotation relative admise par les moyens d'encliquetage (9) entre la bague (5) et le moyeu associé (2) n'est pas supérieur à l'angle de rotation réciproque effectuée par lesdits moyeux (1, 2) lors de la sortie des éléments de roulement des encoches (4), de telle sorte que les dents (13) et lesdits éléments de roulement (3) ne commencent à entrer dans les sièges (14) et dans les encoches (4) et à les engager que quand le moyeu moteur (2) est mis en rotation dans une direction opposée à celle de son fonctionnement normal, caractérisé:
- en ce que la bague (5) est disposée à l'intérieur du chemin annulaire (10) et est associée rigidement par ses saillies (11) à une seconde bague (6) occupant un autre logement (8) disposé coaxial avec le chemin annulaire (10) et à l'extérieur de ce dernier.

2. Accouplement roue-libre de transmission selon la revendication 1, caractérisé en ce que les moyens d'encliquetage (9) servent à établir trois positions angulaires relatives entre la bague (5) et le moyeu (2 ou 1), comprenant une position centrale de fonctionnement normal dans laquelle les dents (13) et les éléments de roulement (3) sont en alignement avec les sièges (14) et les encoches (4), et deux positions latérales dans lesquelles il ne peut se produire que l'alignement des éléments de roulement (3) avec les encoches (4) respectives ou l'alignement des dents (13) avec les sièges (14) respectifs.

3. Accouplement roue-libre de transmission selon la revendication 1, caractérisé en ce que les moyens d'encliquetage (9) sont prévus en au moins deux positions espacées l'une de l'autre de la même distance angulaire autour de l'axe commun des moyeux (1, 2).
